# FASCICULE DE BREVET EUROPEEN

(11) **EP 3 972 462 B1**
(45) Date de publication et mention de la délivrance du brevet: **07.06.2023**
(21) Numéro de dépôt: 20726443.3
(22) Date de dépôt: 19.05.2020
(51) Int. Cl.: A47J 27/00, A47J 36/02

(54) **ARTICLE CULINAIRE COMPORTANT UNE CALOTTE EN ALUMINIUM**
KULINARISCHER ARTIKEL MIT ALUMINIUMKAPPE
CULINARY ARTICLE COMPRISING AN ALUMINUM CAP

(30) Priorité: 23.05.2019 FR 1905455
(43) Date de publication de la demande: 30.03.2022
(73) Titulaire: SEB S.A., 69130 Ecully (FR)
(72) Inventeur: AUBIN, Laurent, 74150 RUMILLY (FR)
(74) Mandataire: SEB Développement
(86) Numéro de dépôt international: PCT/EP2020/064010
(87) Numéro de publication internationale: WO 2020/234322

(56) Documents cités:
- FR-A1- 2 897 251
- FR-A1- 2 919 168
- FR-A1- 2 925 273
- FR-A1- 2 931 649
- US-A1- 2011 198 358
- US-A1- 2018 020 869

## Description

La présente invention concerne le domaine technique des articles culinaires ou récipients de cuisson réalisés à partir d'une feuille d'alliage d'aluminium emboutie ou fluotournée.

Les récipients de cuisson comportent généralement un fond destiné à être disposé sur un foyer de cuisson (tel que par exemple une plaque de chauffe électrique, une plaque de chauffe par induction, un brûleur à combustible, ou analogue), ce fond étant entouré par une paroi latérale s'élevant autour du fond. La face supérieure du fond forme une surface de cuisson des aliments. La face inférieure du fond forme une surface de chauffe.

La présente invention concerne notamment, mais non exclusivement, les récipients de cuisson de type poêle. Les récipients de cuisson de type poêle peuvent être définis par une hauteur inférieure à leur largeur ou à leur diamètre. Généralement la largeur ou le diamètre de tels récipients de cuisson est plusieurs fois supérieur(e) à leur hauteur.

L'utilisation des alliages d'aluminium dans le domaine culinaire est connue depuis des années. La bonne conductivité thermique de l'aluminium permet d'envisager la réalisation de récipients de cuisson présentant un corps en alliage d'aluminium.

Dans les récipients de cuisson présentant un corps en alliage d'aluminium, la paroi latérale joue le rôle d'une ailette de refroidissement, qui contribue à limiter l'échauffement de la partie périphérique du fond. Il en résulte un différentiel de température sur le fond, notamment entre le centre et la périphérie de la surface de chauffe.

La répartition de la matière utilisée pour un récipient de cuisson peut être décrite par le rapport épaisseur du fond / épaisseur de la paroi latérale. En pratique usuelle pour les récipients de cuisson en alliage d'aluminium ce rapport épaisseur du fond / épaisseur de la paroi latérale n'excède pas 1,8, notamment pour les récipients de cuisson réalisés à partir d'une feuille d'alliage d'aluminium emboutie ou fluotournée. Une poêle de 28 cm de diamètre présente une épaisseur de fond de 5,1 mm et une épaisseur de paroi latérale de 2,9 mm, soit un rapport de 1,76.

Un des principaux critères d'évaluation de la qualité d'un récipient de cuisson est son homogénéité de cuisson. L'homogénéité de cuisson correspond à l'aptitude du récipient de cuisson à cuire de manière uniforme les aliments, quel que soit l'emplacement des aliments sur le fond du récipient de cuisson.

Un inconvénient des récipients de cuisson en alliage d'aluminium réalisés à partir d'une feuille d'alliage d'aluminium emboutie ou fluotournée réside dans la sensibilité de la surface de cuisson aux variations de température causées par la paroi latérale. Lors de la préchauffe, des écarts de température importants peuvent être observés sur la surface de cuisson, avec par exemple une température de 180°C à l'endroit le plus chaud de la surface de cuisson et inférieure à 120°C à l'endroit le moins chaud de la surface de cuisson. Ces écarts de température contribuent à diminuer l'homogénéité de cuisson des aliments cuits dans le récipient de cuisson.

L'objectif est de fabriquer des récipients de cuisson avec une répartition de la matière selon son rôle thermique, afin d'améliorer à la fois ses propriétés d'homogénéité et de préchauffe tout en limitant l'augmentation du poids de l'article.

Un objet de la présente invention vise à proposer un récipient de cuisson comportant une calotte en alliage d'aluminium réalisée à partir d'une feuille d'alliage d'aluminium emboutie ou fluotournée, dans lequel l'homogénéité de la température de la surface de cuisson est améliorée, sans entraîner une augmentation excessive de la masse du récipient de cuisson.

Cet objet est atteint avec un article culinaire selon la revendication 1.

L'utilisation des alliages d'aluminium dans le domaine culinaire est connue depuis des années comme divulgué dans FR 2 925 273 A1. Cependant, les nuances d'alliages usuelles (Al 1050, Al 1200, Al 3003, Al 4006) possèdent des propriétés de tenue mécanique faibles. Il est rappelé que les alliages utilisés doivent être conformes aux normes d'alimentarité (teneur en Zn<0,25 % et teneur en Cu<0,6 %).

L'utilisation de l'alliage 6082 de la série 6000 permet de repenser la conception des récipients de cuisson pour améliorer leur homogénéité de cuisson tout en réduisant leur masse et en limitant l'augmentation du temps de préchauffe. Cet alliage présente une limite élastique élevée, et est plus dur que les alliages d'aluminium habituellement utilisés pour réaliser des récipients de cuisson, ce qui permet d'envisager de réduire davantage l'épaisseur de la paroi latérale du récipient de cuisson, du fait de cette meilleure tenue mécanique.

### Série 6000 (aluminium magnésium silicium)

Les éléments d'alliage de cette série sont le magnésium (Mg) et le silicium (Si). Cette famille d'alliage a une grande importance industrielle. Elle est très utilisée pour les profilés.

Ils ont une très bonne aptitude à la déformation (filage, matriçage principalement) et à la mise en forme à froid à l'état recuit. Leurs caractéristiques mécaniques sont moyennes et sont inférieures à celles des alliages 2000 et 7000. Ces caractéristiques peuvent être augmentées par addition de silicium qui donnera le précipité durcissant Mg2Si. Ils ont une excellente résistance à la corrosion notamment atmosphérique. Ils se soudent très bien (soudure à l'arc ou brasage).

On peut les diviser en deux groupes :
- un groupe dont les compositions sont plus chargées en magnésium et silicium (6061, 6082 par exemple). Ils sont utilisés pour des applications de structure (charpente, pylône...), ainsi qu'en aéronautique (liaisons électriques, boitiers électroniques embarqués...) ;
- une deuxième catégorie moins chargée en silicium qui par conséquent aura des caractéristiques mécaniques plus faibles. C'est le cas du 6060 qui permettra de grandes vitesses de filage mais qui aura des caractéristiques mécaniques plus faibles. Il sera utilisé par exemple en décoration et ameublement, menuiserie métallique.

Il faut également noter l'existence du 6101 anciennement appelé Almelec. Cet alliage a été énormément utilisé pour ses aptitudes de conducteur électrique. Il a notamment été utilisé pour la fabrication de lignes moyenne et haute tension en France.

**[Tableau 1]**

| **Composition** | | | | | | | | | | | | | | |
|---|---|---|---|---|---|---|---|---|---|---|---|---|---|---|
| **Alliage** | **-** | **Si** | **Fe** | **Cu** | **Mn** | **Mg** | **Cr** | **Ni** | **Zn** | **Ti** | **Zr+Ti** | **Autres chaque** | **Autres total** | **Al** |
| 6060 | Min. | 0,03 | 0,10 | 1 | 1 | 0,35 | / | / | / | / | / | / | / | le reste |
| | Max. | 0,60 | 0,30 | 0,10 | 0,10 | 0,60 | 0,05 | / | 0,15 | 0,10 | / | 0,05 | 0,15 | |
| 6082 | Min. | 0,70 | / | / | 0,40 | 0,60 | / | / | / | / | / | / | / | le reste |
| | Max. | 1,30 | 0,50 | 0,10 | 1,00 | 1,20 | 0,25 | / | 0,20 | 0,10 | / | 0,05 | 0,15 | |
| 6101 | Min. | 0,30 | / | / | / | 0,35 | / | / | / | / | / | / | / | le reste |
| | Max. | 0,70 | 0,50 | 0,10 | 0,03 | 0,80 | 0,30 | / | 0,10 | / | / | 0,05 | 0,15 | |

Les concentrations sont en pourcentage massique.

L'utilisation de l'alliage 5754 de la série 5000 permet de repenser la conception des récipients de cuisson pour améliorer leur homogénéité de cuisson tout en réduisant leur masse et en limitant l'augmentation du temps de préchauffe. Cet alliage est plus dur que l'alliage d'aluminium de la série 6000 de la nuance 6082, ce qui permet également d'envisager de réduire davantage l'épaisseur de la paroi latérale du récipient de cuisson, du fait de cette meilleure tenue mécanique.

**[Tableau 2]**

| **5754 (AW-AlMg3) :** Composition chimique nominale % (selon norme EN 573-1) : | | | | | | | | | | | |
|---|---|---|---|---|---|---|---|---|---|---|---|
| Si | Fe | Cu | Mn | Mg | Cr | Zn | Remarques | Ti | Autres | | Al |
| | | | | | | | | | Chaque | Total | |
| 0,40 | 0,40 | 0,10 | 0,50 | 2,6-3,6 | 0,30 | 0,20 | 0,10-0,6 Mn+Cr | 0,15 | 0,05 | 0,15 | Reste |

L'utilisation de l'alliage 5083 de la série 5000 permet de repenser la conception des récipients de cuisson pour améliorer leur homogénéité de cuisson tout en réduisant leur masse et en limitant l'augmentation du temps de préchauffe. Cet alliage est plus dur que l'alliage d'aluminium de la série 5000 de la nuance 5754, ce qui permet également d'envisager de réduire davantage l'épaisseur de la paroi latérale du récipient de cuisson, du fait de cette meilleure tenue mécanique.

**[Tableau 3]**

| **5083 (AW-AlM g4,5Mn 0,7)** : Composition chimique nominale % (selon norme EN 573-1) : | | | | | | | | | | | |
|---|---|---|---|---|---|---|---|---|---|---|---|
| Si | Fe | Cu | Mn | Mg | Cr | | Zn | Ti | Autres | | Al |
| | | | | | | | | | Chaque | Total | |
| 0,40 | 0,40 | 0,10 | 0,4-1,0 | 4,0-4,9 | 0,05-0,25 | - | 0,25 | 0,15 | 0,05 | 0,15 | Reste |

### Série 5000 (aluminium magnésium)

L'élément d'alliage est le magnésium (jusqu'à 5 %). Ce sont des alliages par écrouissage.

Ces alliages ont des caractéristiques mécaniques moyennes qui augmentent avec le taux de magnésium. Ces caractéristiques augmenteront également avec le taux d'écrouissage.

Ils ont une bonne aptitude à la déformation, cette aptitude diminuant si le taux de magnésium augmente. Ils ont un excellent comportement à la soudure et à ce titre sont utilisés en chaudronnerie soudure. Ils ont également un bon comportement aux basses températures. Ils ont un bon comportement à la corrosion qui justifie leur utilisation dans les applications marines.

Ils sont utilisés dans la construction navale, le transport, l'industrie chimique.

**[Tableau 4]**

| Composition | | | | | | | | | | | | | | |
|---|---|---|---|---|---|---|---|---|---|---|---|---|---|---|
| **Alliage** | **-** | **Si** | **Fe** | **Cu** | **Mn** | **Mg** | **Cr** | | **Ni Zn** | **Ti** | **Zr+Ti** | **Autres chaque** | **Autres total** | **Al** |
| 5005 | Min. | / | / | / | / | 0,50 | / | / | / | / | / | / | / | le reste |
| | Max. | 0,30 | 0,70 | 0,20 | 0,20 | 1,10 | 0,10 | / | 0,25 | / | / | 0,05 | 0,15 | |
| 5086 | Min. | / | / | / | 0,20 | 3,50 | 0,05 | / | / | / | / | / | / | le reste |
| | Max. | 0,40 | 0,50 | 0,10 | 0,70 | 4,50 | 0,25 | / | 0,25 | 0,15 | / | 0,05 | 0,15 | |

Les concentrations sont en pourcentage massique.

Préférentiellement, la paroi de fond présente une épaisseur au moins 2,5 fois supérieure à celle de la paroi latérale.

Préférentiellement, la paroi de fond présente une épaisseur inférieure ou égale à 15 fois celle de la paroi latérale, de préférence inférieure ou égale à 13,5 fois celle de la paroi latérale.

Préférentiellement, la calotte présente un rapport diamètre/hauteur inférieur à 0,5, et de préférence inférieur à 0,3.

Préférentiellement, la calotte présente un rapport diamètre/hauteur compris entre 0,5 et 0,1, et de préférence compris entre 0,3 et 0,1.

Si désiré, la face interne peut être revêtue partiellement ou entièrement, notamment avec un revêtement PTFE, céramique ou sol-gel.

Si désiré la face externe peut être revêtue partiellement ou entièrement, notamment avec un revêtement émail, PTFE, céramique ou sol-gel.

Préférentiellement, l'insert métallique est formé par une grille.

Cette grille peut être assemblée par frappe, par exemple par frappe à froid, de préférence avant mise en forme de la feuille d'alliage. Son épaisseur est comprise entre 0,3 et 1 mm, de préférence environ 0,6 mm. Les trous de la grille peuvent présenter un diamètre compris entre 2 et 4 mm, de préférence environ 3 mm.

L'insert métallique est réalisé en matériau ferromagnétique.

L'insert métallique rend l'article culinaire selon l'invention compatible avec une chauffe par induction.

Un autre objet de l'invention concerne un procédé de fabrication d'un article culinaire selon l'invention comprenant les étapes suivantes :
- Fournir une feuille d'alliage d'aluminium de la série 6000 de la nuance 6082,
- Eventuellement rapporter sur la face externe un insert métallique
- Emboutir ou fluotourner ladite feuille en forme de calotte,
- Eventuellement appliquer sur la face interne partiellement ou entièrement un revêtement PTFE, ou céramique, ou sol-gel,
- Eventuellement appliquer sur la face externe partiellement ou entièrement un revêtement émail, PTFE, céramique, ou sol-gel.

Un autre objet de l'invention concerne l'utilisation d'une calotte métallique d'un article culinaire selon la revendication 1 sous la forme d'une feuille d'alliage d'aluminium emboutie ou fluotournée de la série 6000 de la nuance 6082 pour améliorer le temps de préchauffe dudit article culinaire.

Le moyen utilisé consiste à augmenter l'épaisseur de la paroi de fond et de diminuer celle de la paroi latérale, ce qui revient à maximiser le rapport d'épaisseur paroi de fond/paroi latérale. La difficulté est ici de répartir idéalement la matière en fonction de son rôle thermique tout en respectant l'impératif de tenue mécanique (notamment au point de fixation d'une poignée sur la paroi latérale).

La mise en oeuvre de ces constructions ne fait pas appel à des procédés de transformation spécifique. Les paramètres utilisés lors des opérations d'emboutissage, de fluotournage ou de frappe pour assembler un fond compatible avec une chauffe par induction sont bien évidemment à adapter aux nouvelles épaisseurs à obtenir. Par exemple, la force de frappe pour l'insertion d'une grille sera par exemple significativement revue à la hausse pour compenser la plus forte résistance à la pénétration de la grille qu'apportera le nouvel alliage.

L'invention sera mieux comprise à l'étude des exemples de réalisation, pris à titre nullement limitatif, illustrés dans les figures annexées, dans lesquelles :
[Fig. 1] la figure 1 est une représentation schématique en coupe d'un exemple de réalisation d'un article culinaire selon l'art antérieur,
[Fig. 2] la figure 2 est une représentation schématique en coupe d'un exemple de réalisation d'un article culinaire selon l'invention,
[Fig. 3] la figure 3 est une représentation schématique partielle en coupe d'une variante de réalisation d'un article culinaire selon l'art antérieur,
[Fig. 4] la figure 4 est une représentation d'un insert métallique inséré dans le fond de l'article culinaire illustré sur la figure 3,
[Fig. 5] la figure 5 est une représentation schématique partielle en coupe d'une variante de réalisation d'un article culinaire selon l'invention,
[Fig. 6] la figure 6 est une représentation d'un insert métallique inséré dans le fond de l'article culinaire illustré sur la figure 5.

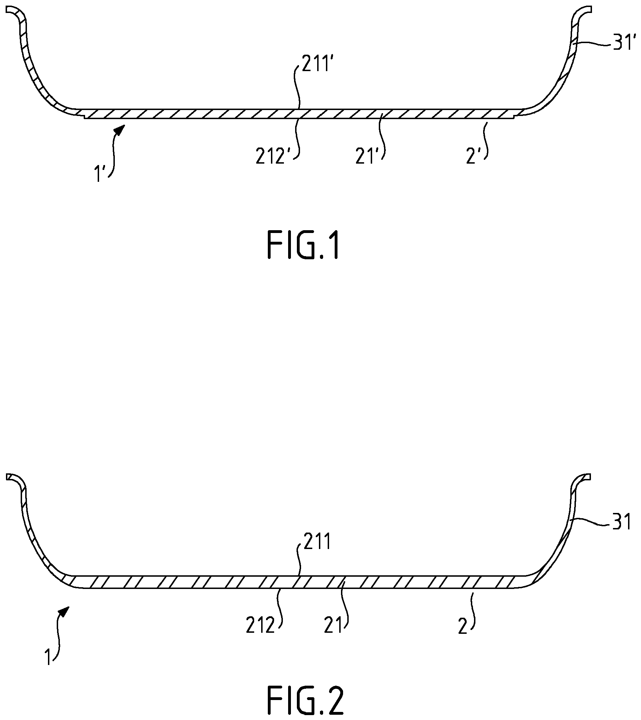

Les figures 1 et 2 illustrent des articles culinaires 1',1 comportant une calotte 2', 2 métallique présentant une paroi de fond 21', 21 et une paroi latérale 31', 31 s'élevant autour de la paroi de fond 21', 21. La calotte 2', 2 est une feuille d'alliage d'aluminium fluotournée. A titre de variante, la calotte 2', 2 pourrait être une feuille d'alliage d'aluminium emboutie. La paroi de fond 21', 21 présente une face interne 211', 211 destinée à la cuisson des aliments et une face externe 212', 212 destinée à être disposée à proximité d'une source de chaleur. Si désiré, la face interne 211', 211 peut être revêtue partiellement ou entièrement d'un revêtement, par exemple un revêtement PTFE, ou un revêtement céramique, ou un revêtement sol-gel. Si désiré, la face externe 212', 212 peut être revêtue partiellement ou entièrement d'un revêtement, par exemple un revêtement PTFE, ou un revêtement céramique, ou un revêtement sol-gel. Si désiré, l'article culinaire 1', 1 peut comporter une poignée (non représentée sur les figures 1 et 2) montée sur la calotte 2', 2.

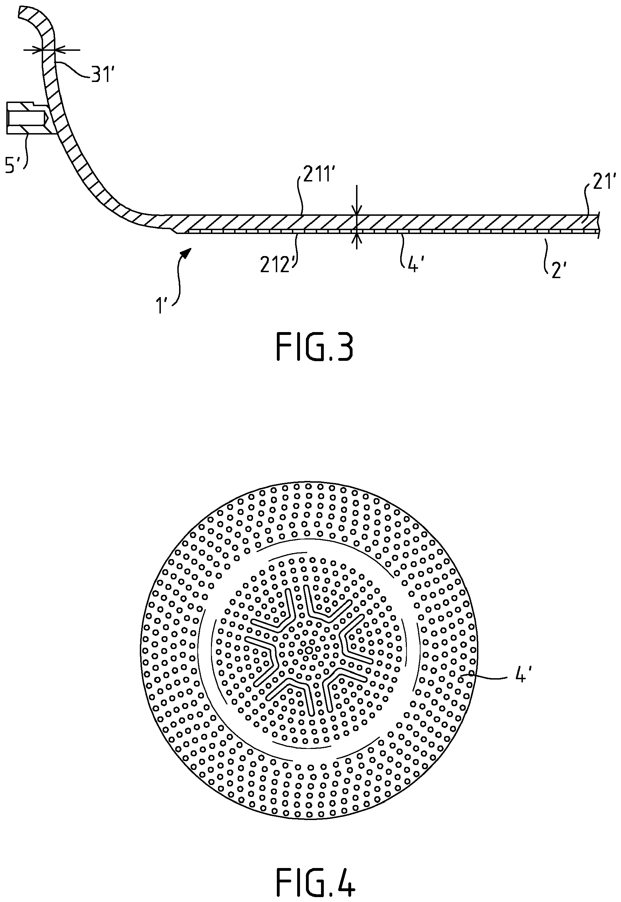

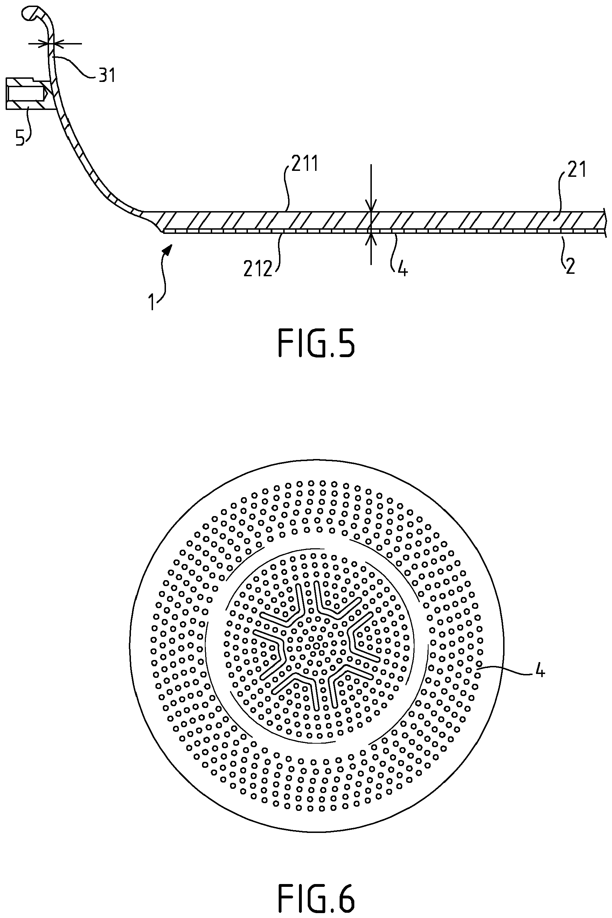

Selon les variantes de réalisation illustrées sur les figures 3 et 5, l'article culinaire 1', 1 comporte une poignée 5', 5 fixée sur la calotte 2', 2. Par ailleurs, un insert métallique 4', 4 est rapporté sur la face externe 212', 212 de la paroi de fond 21', 21. Les figures 4 et 6 montrent les inserts métalliques 4', 4 présents dans les articles culinaires 1', 1 illustrés sur les figures 3 et 5. Les inserts métalliques 4', 4 sont formés par des grilles. Les inserts métalliques 4', 4 peuvent être réalisés en matériau ferromagnétique, notamment en acier inoxydable ferritique, pour obtenir un article culinaire 1', 1 compatible avec une chauffe par induction. L'épaisseur des inserts métalliques est par exemple de l'ordre de 0,6 mm.

Dans les articles culinaires de l'art antérieur illustrés sur les figures 1, 3 et 4, la calotte 2' est une feuille d'alliage d'aluminium de la série 4000 de la nuance 4006, avec un diamètre de 28 cm. La paroi de fond 21' présente une épaisseur de l'ordre de 4,5 mm. La paroi latérale 31' présente une épaisseur de l'ordre de 3 mm, cette épaisseur de paroi latérale correspondant à une épaisseur minimale mesurée en dessous du bord extérieur de la calotte 2'. Le rapport entre l'épaisseur de la paroi de fond 21' et l'épaisseur de la paroi latérale 31' est de l'ordre de 1,5.

Dans les articles culinaires selon l'invention illustrés sur les figures 2, 5 et 6, la calotte 2 est une feuille d'alliage d'aluminium de la série 6000 de la nuance 6082, avec un diamètre de 28 cm. La hauteur de la calotte 2 est de l'ordre de 55 mm soit un rapport hauteur / diamètre de l'ordre de 0,2. La paroi de fond 21 présente une épaisseur de l'ordre de 6 mm. La paroi latérale 31 présente une épaisseur de l'ordre de 2 mm, cette épaisseur de paroi latérale correspondant à une épaisseur minimale mesurée en dessous du bord extérieur de la calotte 2. Le rapport entre l'épaisseur de la paroi de fond 21 et l'épaisseur de la paroi latérale 31 est de l'ordre de 3. A titre de variante, la calotte pourrait être ou une feuille d'alliage d'aluminium de la série 5000 de la nuance 5754, ou une feuille d'alliage d'aluminium de la série 5000 de la nuance 5083. A titre de variante, la calotte pourrait présenter d'autres diamètres, et/ou d'autres hauteurs, et/ou d'autres épaisseurs de paroi de fond 21, et/ou d'autres épaisseurs de paroi latérale 31.

### EXEMPLES

Des essais ont été réalisés avec deux prototypes en alliage 6082 (PR21 et PR22) (poêle de diamètre 28 cm, réalisée en alliage 6082, correspondant à la variante de réalisation de la figure 5, avec une épaisseur de paroi latérale de 2 mm, une épaisseur de paroi de fond de 6 mm, une hauteur de paroi latérale de 55 mm, un diamètre de fond de 225 mm, et un diamètre de grille inox ajourée de 225 mm, représentée sur la figure 6).

L'article culinaire de référence utilisé est la poêle PO28GCBV Expertise (poêle de diamètre 28 cm Grand Chef Bord verseur, réalisée en alliage 4006, correspondant à la variante de réalisation de la figure 3, avec une épaisseur de paroi latérale de 3 mm, une épaisseur de paroi de fond de 4,5 mm, une hauteur de paroi latérale de 55 mm, un diamètre de fond de 210 mm, et un diamètre de grille inox ajourée de 205 mm, représentée sur la figure 4).

Les deux grilles présentent une partie centrale identique, la différence de diamètre correspond à un anneau extérieur non ajouré.

### TEST DE PRECHAUFFE

Les essais de préchauffe ont été réalisés sur une plaque à induction.

Le test de préchauffe consiste à placer la poêle à vide sur le moyen de chauffe. Une fois qu'un des points de l'article atteint 180°C, on mesure l'écart de température maximum entre deux points du fond afin de quantifier le critère d'homogénéité. Le temps de préchauffe correspond quant à lui au temps nécessaire pour qu'un point atteigne 180°C.

**[Tableau 5]**

| **TEST PRE CHAUFFE JFFE** | | | |
|---|---|---|---|
| Calcul de l'écart de T° max - min sur la surface de cuisson quand T° max = 180°C | | | |
| | | **Δ T°** | **Gain** |
| **Standard Prod N°1** | **EXPERTISE** | 93 | **35%** |
| **Prototype 6082** | **PR22** | 60 | |

On remarque que l'augmentation du rapport paroi de fond/paroi latérale améliore l'homogénéité de l'article culinaire tout en réduisant son poids.

### TEST BLANC D'ŒUF

Les essais de blanc d'oeuf ont été réalisés sur plusieurs plaques à induction (caractéristiques décrites dans le tableau ci-dessous).

Ce test de cuisson consiste à relever le temps nécessaire à l'étalement de la coagulation de 150g de blanc d'oeuf sur 100 % de la surface de cuisson de la poêle. Pour ce faire, on verse des blancs d'oeufs battus dans une poêle froide. On démarre le moyen de chauffe puis on observe le pourcentage de coagulation après arrêt de la cuisson et rinçage sous eau de la part non coagulée des blancs d'oeufs. On réitère l'opération en incrémentant le temps de cuisson de 10 secondes, jusqu'à coagulation complète des blancs d'oeufs.

L'augmentation du rapport d'épaisseur par rapport au standard permet ainsi de réduire significativement ce temps de cuisson tout en diminuant le poids de l'article culinaire.

**[Tableau 6]**

| | **Référence Plaque** | | | | | |
|---|---|---|---|---|---|---|
| | **"BALAY" ^{®}** | | **"WHIRLPOOL" ^{®}** | | **"BOSCH" ^{®}** | |
| | **Réf : 3EB915LR** | | **Réf : ACM701** | | **Réf : PIL611B18E** | |
| | **Puissance : 2200 W** | | **Puissance : 2000 W** | | **Puissance : 2200 W** | |
| | **Ø Inducteur 230 mm** | | **Ø Inducteur 250 mm** | | **Ø Inducteur 272 mm** | |
| | **Temps** | **Gain** | **Temps** | **Gain** | **Temps** | **Gain** |
| | | | | | | |
| **EXPERTISE** | **84** | | **67** | | **52** | |
| **PR21** | **39** | **54%** | **53** | **21%** | **37** | **29%** |

D'autres essais ont été réalisés avec deux prototypes en alliage 5754 et avec deux prototypes en alliage 5083 (poêle de diamètre 28 cm, correspondant à la variante de réalisation de la figure 5, avec une épaisseur de paroi latérale de 1,9 mm ou de 1 mm, une épaisseur de paroi de fond de 4,5 mm ou de 8 mm, une hauteur de paroi latérale de 55 mm, un diamètre de fond de 225 mm, et un diamètre de grille inox ajourée de 205 mm, représentée sur la figure 4).

L'article culinaire de référence utilisé est également la poêle PO28GCBV Expertise (poêle de diamètre 28 cm Grand Chef Bord verseur, réalisée en alliage 4006, correspondant à la variante de réalisation de la figure 3, avec une épaisseur de paroi latérale de 3 mm, une épaisseur de paroi de fond de 4,5 mm, une hauteur de paroi latérale de 55 mm, un diamètre de fond de 210 mm, et un diamètre de grille inox ajourée de 205 mm, représentée sur la figure 4).

### TEST DE PRECHAUFFE

Les essais de préchauffe ont été réalisés sur une plaque à induction dans les mêmes conditions que le test précédent, hormis la puissance moyenne de l'ordre de 2000 W au lieu de 2200W.

**[Tableau 7]**

| **TEST PRE CHAUFFE** | | | | | | | | | |
|---|---|---|---|---|---|---|---|---|---|
| Calcul de l'écart de T° max - min sur la surface de cuisson quand T° max = 180°C | | | | | | | | | |
| **N°** | **ALLIAGE** | **Ep. Fond (mm)** | **Ep. Jupe (mm)** | **Temps pour atteindre 180°C (s)** | **T. moy. [°C]** | **T. mini [°C]** | **T. maxi [°C]** | **Δ T° (°C)** | **P. moy. (W)** |
| **PO 2** | **5754** | 4,5 | 1,9 | 42 | 132 | 55 | 183 | 128 | 2021 |
| **PO 3** | **5754** | 8 | 1 | 75 | 148 | 96 | 180 | 84 | 2024 |
| | | | | | | | | | |
| **PO 5** | **5083** | 4,5 | 1,9 | 40 | 131 | 63 | 180 | 117 | 2002 |
| **PO 6** | **5083** | 8 | 1 | 70 | 148 | 102 | 181 | 79 | 2023 |
| | | | | | | | | | |
| **Standard** | **4006** | 4,5 | 3 | 58 | 140 | 91 | 181 | 90 | 2019 |

Pour un alliage donné, on remarque que l'augmentation du rapport paroi de fond/paroi latérale améliore l'homogénéité de chauffe de l'article culinaire. On remarque également qu'avec les alliages série 5000 une homogénéité de chauffe meilleure que celle de l'article culinaire de référence peut être obtenue, en utilisant un rapport paroi de fond/paroi latérale plus important.

## Revendications

1. Article culinaire (1) comprenant une calotte (2) métallique présentant une paroi de fond (21) et une paroi latérale (31) s'élevant autour de la paroi de fond (21), ladite paroi de fond (21) présentant une face interne (211) destinée à la cuisson des aliments et une face externe (212) destinée à être disposée à proximité d'une source de chaleur, un insert métallique (4) étant rapporté sur la face externe (212), l'insert métallique (4) étant réalisé en matériau ferromagnétique, de sorte que l'article culinaire (1) soit compatible avec une chauffe par induction, ladite calotte (2) étant une feuille d'alliage d'aluminium emboutie ou fluotournée de la série 6000, **caractérisé en ce que** ladite calotte (2) est une feuille d'alliage d'aluminium de la nuance 6082, et **en ce que** la paroi de fond (21) présente une épaisseur au moins 2 fois supérieure à celle de la paroi latérale (31).

2. Article culinaire selon la revendication 1, **caractérisé en ce que** la paroi de fond (21) présente une épaisseur au moins 2,5 fois supérieure à celle de la paroi latérale (31).

3. Article culinaire selon l'une des revendications 1 ou 2, **caractérisé en ce que** la paroi de fond (21) présente une épaisseur inférieure ou égale à 15 fois celle de la paroi latérale (31).

4. Article culinaire selon l'une des revendications 1 à 3, **caractérisé en ce que** la paroi de fond (21) présente une épaisseur inférieure ou égale à 13,5 fois celle de la paroi latérale (31).

5. Article culinaire selon l'une des revendications 1 à 4, **caractérisé en ce que** la face interne (211) est revêtue partiellement ou entièrement d'un revêtement PTFE, ou céramique, ou sol-gel.

6. Article culinaire selon l'une des revendications 1 à 5, **caractérisé en ce que** la face externe (212) est revêtue partiellement ou entièrement d'un revêtement émail, ou PTFE, ou céramique, ou sol-gel.

7. Article culinaire selon l'une des revendications 1 à 6, **caractérisé en ce que** l'insert métallique (4) est formé par une grille.

8. Article culinaire selon l'une quelconque des revendications 1 à 7, **caractérisé en ce que** la calotte (2) présente un rapport diamètre/hauteur inférieur à 0,5.

9. Article culinaire selon l'une quelconque des revendications 1 à 8, **caractérisé en ce que** la calotte (2) présente un rapport diamètre/hauteur inférieur à 0,3.

10. Article culinaire selon l'une quelconque des revendications 1 à 9, **caractérisé en ce que** la calotte (2) présente un rapport diamètre/hauteur compris entre 0,5 et 0,1.

11. Article culinaire selon l'une quelconque des revendications 1 à 10, **caractérisé en ce que** la calotte (2) présente un rapport diamètre/hauteur compris entre 0,3 et 0,1.

12. Procédé de fabrication d'un article culinaire selon l'une quelconque des revendications 1 à 11, comprenant les étapes suivantes :
- Fournir une feuille d'alliage d'aluminium de la série 6000 de la nuance 6082,
- Eventuellement rapporter sur la face externe (212) un insert métallique (4),
- Emboutir ou fluotourner ladite feuille en forme de calotte (2),
- Eventuellement appliquer sur la face interne (211) partiellement ou entièrement un revêtement PTFE, ou céramique, ou sol-gel,
- Eventuellement appliquer sur la face externe (212) partiellement ou entièrement un revêtement émail, PTFE, céramique, ou sol-gel.

13. Utilisation d'une calotte (2) métallique d'un article culinaire selon l'une des revendications 1 à 11 sous la forme d'une feuille d'alliage d'aluminium emboutie ou fluotournée de la série 6000 de la nuance 6082 pour améliorer le temps de préchauffe dudit article culinaire.

## Patentansprüche

1. Kochgeschirr (1) mit einer metallischen Kalotte (2), die eine Bodenwand (21) und eine sich um die Bodenwand (21) herum erhebende Seitenwand (31) aufweist, wobei die Bodenwand (21) eine Innenseite (211), die zum Kochen von Nahrungsmitteln bestimmt ist, und eine Außenseite (212) aufweist, die dazu bestimmt ist, in der Nähe einer Wärmequelle angeordnet zu werden, wobei ein Metalleinsatz (4) an der Außenseite (212) angebracht ist, wobei der Metalleinsatz (4) aus einem ferromagnetischen Material hergestellt ist, so dass das Kochgeschirr (1) mit einer Erwärmung durch Induktion kompatibel ist, wobei die Kalotte (2) ein tiefgezogenes oder fließgedrücktes Blatt aus einer Aluminiumlegierung der Serie 6000 ist, **dadurch gekennzeichnet, dass** die Kalotte (2) ein Blatt aus einer Aluminiumlegierung der Sorte 6082 ist, und dass die Bodenwand (21) eine Dicke aufweist, die mindestens zweimal so groß ist wie die der Seitenwand (31).

2. Kochgeschirr nach Anspruch 1, **dadurch gekennzeichnet, dass** die Bodenwand (21) eine Dicke aufweist, die mindestens 2,5-mal größer ist als die der Seitenwand (31).

3. Kochgeschirr nach einem der Ansprüche 1 oder 2, **dadurch gekennzeichnet, dass** die Bodenwand (21) eine Dicke aufweist, die kleiner oder gleich dem 15-fachen der Dicke der Seitenwand (31) ist.

4. Kochgeschirr nach einem der Ansprüche 1 bis 3, **dadurch gekennzeichnet, dass** die Bodenwand (21) eine Dicke aufweist, die kleiner oder gleich dem 13,5-fachen der Dicke der Seitenwand (31) ist.

5. Kochgeschirr nach einem der Ansprüche 1 bis 4, **dadurch gekennzeichnet, dass** die Innenseite (211) teilweise oder vollständig mit einer PTFE- oder Keramik- oder Sol-Gel-Beschichtung versehen ist.

6. Kochgeschirr nach einem der Ansprüche 1 bis 5, **dadurch gekennzeichnet, dass** die Außenseite (212) teilweise oder vollständig mit einer Emaille- oder PTFE- oder Keramik- oder Sol-Gel-Beschichtung versehen ist.

7. Kochgeschirr nach einem der Ansprüche 1 bis 6, **dadurch gekennzeichnet, dass** der Metalleinsatz (4) durch ein Gitter gebildet ist.

8. Kochgeschirr nach einem der Ansprüche 1 bis 7, **dadurch gekennzeichnet, dass** die Kalotte (2) ein Verhältnis von Durchmesser zu Höhe von weniger als 0,5 aufweist.

9. Kochgeschirr nach einem der Ansprüche 1 bis 8, **dadurch gekennzeichnet, dass** die Kalotte (2) ein Verhältnis von Durchmesser zu Höhe von weniger als 0,3 aufweist.

10. Kochgeschirr nach einem der Ansprüche 1 bis 9, **dadurch gekennzeichnet, dass** die Kalotte (2) ein Verhältnis von Durchmesser zu Höhe zwischen 0,5 und 0,1 aufweist.

11. Kochgeschirr nach einem der Ansprüche 1 bis 10, **dadurch gekennzeichnet, dass** die Kalotte (2) ein Verhältnis von Durchmesser zu Höhe zwischen 0,3 und 0,1 aufweist.

12. Verfahren zur Herstellung eines Kochgeschirrs nach einem der Ansprüche 1 bis 11, das die folgenden Schritte umfasst:
- Bereitstellen eines Blatts aus einer Aluminiumlegierung der Serie 6000 der Sorte 6082,
- gegebenenfalls Anbringen eines Metalleinsatzes (4) auf der Außenseite (212),
- Tiefziehen oder Fließdrücken des Blatts in die Form einer Kalotte (2),
- gegebenenfalls Versehen der Innenseite (211) teilweise oder vollständig mit einer PTFE- oder Keramik- oder Sol-Gel-Beschichtung,
- gegebenenfalls Versehen der Außenseite (212) teilweise oder vollständig mit einer Emaille-, PTFE-, Keramik- oder Sol-Gel-Beschichtung.

13. Verwendung einer metallischen Kalotte (2) eines Kochgeschirrs nach einem der Ansprüche 1 bis 11 in Form eines tiefgezogenen oder fließgedrückten Blatts aus einer Aluminiumlegierung der Serie 6000 der Sorte 6082 zur Verbesserung der Vorwärmzeit des Kochgeschirrs.

## Claims

1. Culinary article (1) comprising a metal cap (2) having a bottom wall (21) and a side wall (31) rising around the bottom wall (21), said bottom wall (21) having an internal face (211) for cooking food and an external face (212) intended to be arranged in proximity to a heat source, a metal insert (4) being added onto the external face (212), the metal insert (4) being made of a ferromagnetic material, in such a way that the culinary article (1) is compatible with heating via induction, said cap (2) being a sheet of a stamped or flow-formed aluminium alloy of series 6000, **characterised in that** said cap (2) is a sheet of aluminium alloy of 6082 grade, and **in that** the bottom wall (21) has a thickness at least two times greater than that of the side wall (31).

2. Culinary article according to claim 1, **characterised in that** the bottom wall (21) has a thickness at least 2.5 times greater than that of the side wall (31).

3. Culinary article according to one of claims 1 or 2, **characterised in that** the bottom wall (21) has a thickness less than or equal to 15 times that of the side wall (31).

4. Culinary article according to one of claims 1 to 3, **characterised in that** the bottom wall (21) has a thickness less than or equal to 13.5 times that of the side wall (31).

5. Culinary article according to one of claims 1 to 4, **characterised in that** the internal face (211) is coated partially or entirely with a PTFE, or ceramic, or sol-gel coating.

6. Culinary article according to one of claims 1 to 5, **characterised in that** the external face (212) is coated partially or entirely with an enamel, or PTFE, or ceramic, or sol-gel coating.

7. Culinary article according to one of claims 1 to 6, **characterised in that** the metal insert (4) is formed by a grid.

8. Culinary article according to any one of claims 1 to 7, **characterised in that** the cap (2) has a diameter/height ratio less than 0.5.

9. Culinary article according to any one of claims 1 to 8, **characterised in that** the cap (2) has a diameter/height ratio less than 0.3.

10. Culinary article according to any one of claims 1 to 9, **characterised in that** the cap (2) has a diameter/height ratio comprised between 0.5 and 0.1.

11. Culinary article according to any one of claims 1 to 10, **characterised in that** the cap (2) has a diameter/height ratio comprised between 0.3 and 0.1.

12. Method for producing a culinary article according to any one of claims 1 to 11, comprising the following steps:
- Supplying a sheet of aluminium alloy of series 6000 of the 6082 grade,
- Possibly adding on the external face (212) a metal insert (4),
- Stamping or flow-forming said sheet in the shape of a cap (2),
- Possibly applying on the internal face (211) partially or entirely a PTFE, or ceramic, or sol-gel coating,
- Possibly applying on the external face (212) partially or entirely an enamel, PTFE, ceramic, or sol-gel coating.

13. Usage of a metal cap (2) of a culinary article according to one of claims 1 to 11 in the form of a sheet of a stamped or flow-formed aluminium alloy of series 6000 of the 6082 grade to improve the preheating time of said culinary article.
